(19) **Europäisches Patentamt**

**European Patent Office**

**Office européen des brevets**

(11) **EP 1 192 413 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **00947789.4**

(22) Anmeldetag: **06.06.2000**

(51) Int Cl.$^7$: **G01B 11/00**

(86) Internationale Anmeldenummer:
**PCT/DE2000/001839**

(87) Internationale Veröffentlichungsnummer:
**WO 2000/077471 (21.12.2000 Gazette 2000/51)**

(54) **VORRICHTUNG ZUR BERÜHRUNGSLOSEN DREIDIMENSIONALEN VERMESSUNG VON KÖRPERN UND VERFAHREN ZUR BESTIMMUNG EINES KOORDINATENSYSTEMS FÜR MESSPUNKTKOORDINATEN**

DEVICE FOR THE CONTACTLESS THREE-DIMENSIONAL MEASUREMENT OF BODIES AND METHOD FOR DETERMINING A CO-ORDINATE SYSTEM FOR MEASURING POINT CO-ORDINATES

DISPOSITIF DE MESURE 3D SANS CONTACT DE CORPS ET PROCEDE DE DETERMINATION D'UN SYSTEME DE COORDONNEES DE POINTS DE MESURE

(84) Benannte Vertragsstaaten:
**AT BE CH CY DE DK ES FI FR GB GR IE IT LI LU MC NL PT SE**

(30) Priorität: **10.06.1999 DE 19926439**
**10.06.1999 DE 29910132 U**

(43) Veröffentlichungstag der Anmeldung:
**03.04.2002 Patentblatt 2002/14**

(73) Patentinhaber: **MPT Präzisionsteile GmbH Mittweida**
**09648 Mittweida (DE)**

(72) Erfinder:
• **GEBAUER, Dieter**
**D-09648 Mittweida (DE)**
• **STEIGER, Bernhard**
**D-09669 Frankenberg (DE)**

• **GORZEL, Rosa**
**D-09127 Chemnitz (DE)**
• **AUERBACH, Dieter**
**D-09648 Mittweida (DE)**
• **WINKLER, Andrè**
**D-09326 Altgeringswalde (DE)**
• **STRAUBE, Ralf**
**D-04703 Leisnig (DE)**

(74) Vertreter: **Krause, Wolfgang, Dr.-Ing., Dipl.-Ing.**
**Am Schweizerwald 1**
**09648 Mittweida (DE)**

(56) Entgegenhaltungen:
**EP-A- 0 565 357          DE-A- 19 841 235**
**GB-A- 2 332 056          US-A- 4 089 608**
**US-A- 5 548 405**

**Beschreibung**

Die Erfindung betrifft Vorrichtungen zur berührungslosen dreidimensionalen Vermessung von Körpern nach dem Oberbegriff des Patentanspruchs 1 und Verfahren zur Bestimmung eines Koordinatensystems für Messpunktskoordinaten an einer Vorrichtung zur berührungslosen dreidimensionalen Vermessung von Körpern nach dem Oberbegriff des Patentanspruchs 9.

Das Triangulationsverfahren ist eines der am weitesten verbreiteten Verfahren sowohl bei der Abstands- und Längenmessung als auch für die zwei- und dreidimensionale Konturerfassung. Zur Anwendung kommt dabei ein Triangulationssensor, wobei ein Strahl einer Laserdiode durch eine Linse auf das Werkstück fokussiert wird. Dabei erzeugt dieser einen hellen Lichtfleck. Wird dieser unter einem festen Winkel mit einem Lagedetektor oder einer Kamera betrachtet, so verschiebt sich sein Abbildungsort im Bild, sofern sich der Schnittpunkt des Laserstrahls und das Werkstück relativ zum Sensor bewegen. Durch Messung dieser Verschiebung ist der Abstand des Werkstücks bestimmbar oder bei einer Bewegung senkrecht zum beleuchtenden Laserstrahl die Oberflächenkontur erfassbar.

In der DE 43 01 538 A1 (Verfahren und Anordnung zur berührungslosen dreidimensionalen Messung, insbesondere zur Messung von Gebissmodellen) wird ein Drehtisch, auf dem der zu vermessende Körper angeordnet ist, ein Triangulationssensor und eine damit verbundene Datenverarbeitungs- und Steuereinheit zur Bestimmung der Geometrie von Rundteilen eingesetzt. Die Messung basiert dabei entweder

- auf einer lokalen Kalibrierung der einzelnen Messköpfe, wobei bei der Zusammenfassung die tatsächliche Lage der Messflächen im Raum durch Koordinatentransformation zu berücksichtigen sind, oder
- auf einer Kalibrierung der gesamten Messeinrichtung mit wenigstens einem Kalibrierkörper, wobei alle interessierenden Raumpunkte in einer gemeinsamen Kalibriertabelle erfasst werden. Eine Kalibrierung ist dabei unumgänglich.

In der DE 44 07 518 A1 wird eine Vorrichtung und ein Verfahren zum berührungslosen Vermessen dreidimensionaler Objekte auf der Basis der optischen Triangulation beschrieben. Der Triangulationssensor ist in einer Richtung (y-Richtung) verfahrbar und über eine vorgegebene Winkellage an einem wählbaren Fixpunkt in der x-Ebene verschwenkbar. Dazu sind zwei voneinander unabhängige Bewegungen des Triangulationssensors vorhanden. Das zu vermessende Objekt befindet sich auf einem Drehtisch. Dieser gewährleistet zum einen eine Drehbewegung und zum anderen ist dieser mittels eines weiteren Antriebes in einer senkrecht zur Bewegung des Triangulationssensors verfahrbar. Mit den Bewegungen des Triangulationssensors und des Drehtisches sind die Koordinaten des Messflecks der Strahlungsquelle bestimmt. Die Kippbewegung des Triangulationssensors führt dazu, dass Hinterschneidungen, verdeckte Stellen, Sacklöcher oder ähnliche stellen des Objekts weitestgehend maßlich bestimmbar sind.

In der DE 40 37 383 A1 (Verfahren zum kontinuierlichen berührungsfreien Messen von Profilen und Einrichtung zur Durchführung des Messverfahrens) wird das Verfahren der Triangulation zur Bestimmung der Außenkontur eines sich bewegenden Profils genutzt. Dabei wird nur der Abstand des Profils und damit dessen Kontur vom Sensor erfasst. Die Einordnung des Messflecks in ein Koordinatensystem ist nicht möglich.

In den DE 195 04 126 A1 (Vorrichtung und Verfahren zum berührungslosen Vermessen dreidimensionaler Objekte auf der Basis optischer Triangulation), DE 197 27 226 A1 (Messanordnung und Verfahren zum berührungslosen Erfassen der 3-dimensionalen Raumform einer Brillenfassungsnut) und US 5 270 560 (Verfahren und Vorrichtung zur Erfassung der Oberflächenstruktur von Werkstücken) werden die zu erfassenden Profile der Werkstücke oder von Teilen der Werkstücke schrittweise aufgenommen. Dabei erfolgt nur eine relative Vermessung des jeweiligen Werkstücks oder des jeweiligen Teiles des Werkstücks.

Die Koordinatenmessung an einer Objektoberfläche erfolgt in der DE 40 26 942 A1 (Verfahren zur berührungslosen Vermessung von Objektoberflächen) über die Aufnahme von Bildern mittels einer Kamera. Diese befindet sich an einem in drei Raumrichtungen (x-, y-Richtung, Schwenkung) verfahrbaren Messarm eines Koordinatenmessgeräts. Das zu vermessende Objekt ist auf einem Drehtisch angeordnet.

Der in den Patentansprüchen 1 und 9 angegebenen Erfindung liegt das Problem zugrunde, die geometrischen Abmessungen eines Körpers dreidimensional einfach zu messen und Triangulationsmessdaten den geometrischen Abmessungen eines Körpers in drei Dimensionen einfach und korrekt zuzuordnen.

Dieses Problem wird mit den Patentansprüchen 1 oder 9 gelöst.

Die Vorrichtung zur berührungslosen dreidimensionalen Vermessung von Körpern und das Verfahren zur Bestimmung eines Koordinatensystems für Messpunktkoordinaten an einer Vorrichtung zur berührungslosen dreidimensionalen Vermessung von Körpern zeichnen sich durch ihre besonders einfache Realisierung aus. Damit sind diese vorteilhafterweise auch an Produktionsstätten spezieller Werkstücke einsetzbar. Der Aufbau ist sehr einfach und das Verfahren bedingt einen einfachen und ökonomischen Aufbau, so dass ein breiter Anwendungsbereich gegeben ist.

Grundlage ist ein optischer Triangulationssensor. Dabei wird der Strahl einer Laserdiode durch eine Linse auf das Werkstück fokussiert. Auf dem Werkstück entsteht ein Lichtfleck. Dieser Fleck wird mit einem Strahlungsdetektor unter einem festen Winkel aufgenommen. Wenn sich das Werkstück relativ zum Triangulationssensor bewegt, so verschiebt sich der Abbildungsort des Flecks im Bild. Durch die Messung der Verschiebung wird das Profil des Werkstücks bestimmt.

Bevor die Messungen der Werkstücke erfolgt, wird über eine erste Messung ein Koordinatensystem für eine maßliche Zuordnung der Geometrie der Werkstücke ermittelt. Dazu wird ein Körper mit maßlich bekannten Kanten oder Linien auf dem Drehtisch platziert und während einer Drehung über den Triangulationssensor ausgemessen. Die Position des Körpers auf dem Drehtisch ist beliebig. Anstelle des Körpers sind auf der Oberfläche des Drehtisches auch Linien auf- oder einbringbar.

Mit einer Bewegung des Triangulationssensors in nur einer Achse und einer Rotationsbewegung des Werkstückes ist das Werkstück durch den Triangulatiossensor überstreichbar.

Über eine gezielte Ansteuerung der jeweiligen Antriebe und dem Koordinatensystem ist damit eine kontinuierliche Geometrieerfassung des Werkstücks mit einer sehr hohen Messwertrate und Präzision gegeben. Damit zeichnet sich die erfindungsgemäße Vorrichtung durch ihren minimalen Aufbau aus. Durch die geringe Anzahl der notwendigen Bewegungen in Form nur einer translatorischen des Triangulationssensors und einer rotatorischen des Drehtisches zur Bestimmung des Profils eines Körpers wird ein minimaler Messfehler erreicht. Die Vorrichtung ist vorteilhafterweise insbesondere für rotationssymmetrische Werkstücke geeignet. Das Verfahren ist vorteilhafterweise beim Vermessen rotationssymmetrischer Werkstücke einsetzbar.

Die Steuerung und Ermittlung der Geometrie der Werkstücke erfolgt vorteilhafterweise in einem Computer.

Vorteilhafte Ausgestaltungen der Erfindung sind in den Patentansprüchen 2 bis 8 und 10 bis 12 angegeben.

Mit einer Bewegung senkrecht zum beleuchtenden Laserstrahl des Triangulationssensors nach der Weiterbildung des Patentanspruchs 2 wird das Oberflächenprofil des Werkstücks erfasst.

Über ein Dreh- oder Kugelgelenk nach der Weiterbildung des Patentanspruchs 3 ist der Winkel der auf das Werkstück auftreffenden Strahlung des Triangulationssensor veränderbar. Damit sind Erhebungen oder Vertiefungen der Werkstückoberfläche leichter oder überhaupt erst zu erfassen. Die Messung des Winkels des Triangulationssensors erlaubt die Bestimmung der Koordinatendaten der auftreffenden Strahlung.

Die Beaufschlagung von Körpern mit Oberflächen, die gegenüber der Strahlung der Strahlungsquelle ein hohes Streuverhalten in Form von Mehrfachreflexionen aufweisen, führen bei einer Bestrahlung zu Abbildungsverzerrungen auf dem Detektor und daraus resultierend zu Messfehlern. Um diese Messfehler weitestgehend zu vermeiden, werden zumindest die interessierenden Bereiche des Körpers nach der Weiterbildung des Patentanspruchs 4 mit Auflagekörpern bekannter Dicke versehen, deren Oberflächen gegenüber der Strahlung ein geringes Streuverhalten besitzen. Bei der Auswertung der Messergebnisse wird die Dicke der Auflagekörper vom Messwert abgezogen, so dass das Originalmaß des Körpers als korrigierter Messwert vorhanden ist.

Günstige Varianten zur Ermittlung des Koordinatensystems für die Werkstücke sind nach der Weiterbildung des Patentanspruchs 5 parallel verlaufende Linien oder Körperkanten, wobei der Abstand bekannt ist. Dazu werden auf dem Drehtisch entsprechend ausgebildete Körper oder Körper mit derartig aufgebrachten Linien platziert.

Die Ermittlung des Koordinatensystems ist nur bei Inbetriebnahme oder einem Standortwechsel notwendig. Deshalb sind die Körper zur Ermittlung des Koordinatensystems nach der Weiterbildung des Patentanspruchs 6 nur bei diesen Maßnahmen notwendig.

Günstige Varianten einer unterstützten Positionierung und Platzierung der Werkstücke auf dem Drehtisch sind nach den Weiterbildungen der Patentansprüche 7 und 8 mindestens zwei mit einem Abstand zueinander angeordnete Anschläge oder mindestens ein in den Drehtisch integrierter Magnet. Gleichzeitig dienen die Positionierhilfen dem weitestgehenden Verhindern von Änderungen in der Position der Werkstücke auf dem Drehtisch während der Bewegung dessen. Bei Werkstücken gleicher Gestalt führen die Positionierhilfen dazu, dass bei einem Werkstückwechsel annährend die gleiche Position eingehalten wird. Das führt zu einer vereinfachten und schnelleren Messung der Geometrie, so dass z.B. bei Produktionsüberwachungen schneller auf etwaige fehlerhafte Änderungen in der Herstellungstechnologie reagiert werden kann.

So kann der beleuchtende Laserstrahl des Triangulationssensors nach der Weiterbildung des Patentanspruchs 10 senkrecht auf die Oberfläche des Drehtisches gerichtet sein.

Günstig zur Ermittlung des Koordinatensystems für Messpunktskoordinaten ist es nach der Weiterbildung des Patentanspruchs 11, als parallel verlaufende Linien oder Körperkanten gerade oder kreisförmig gebogene Linien zu verwenden.

Die Ermittlung des Koordinatensystems ist nur bei Inbetriebnahme oder einem Standortwechsel notwendig. Deshalb sind die Körper zur Ermittlung des Koordinatensystems nach der Weiterbildung des Patentanspruchs 12 nur bei diesen Maßnahmen notwendig.

Ein Ausführungsbeispiel der Erfindung wird anhand der Figuren 1 bis 4 erläutert. Es zeigen:

Fig. 1                   einen prinzipiellen Aufbau einer Vorrichtung zur berührungslosen dreidimensionalen Vermessung von Körpern,

Fig. 2      eine prinzipielle Darstellung einer Vorrichtung mit zwei parallel zueinander verlaufenden Linien mit bekannten Abstand auf dem Drehtisch,

Fig. 3 und Fig. 4      eine Bestimmung des Koordinatensystems durch zwei parallel verlaufende Linien oder Körperkanten mit bekannten Abstand und bekannten Winkeln und eine bekannte Verschiebung des Triangulationssensors.

Eine Vorrichtung zur berührungslosen dreidimensionalen Vermessung von Körpern und ein Verfahren zur Bestimmung eines Koordinatensystems für Messpunktskoordinaten werden nachfolgend in dem Ausführungsbeispiel näher erläutert.

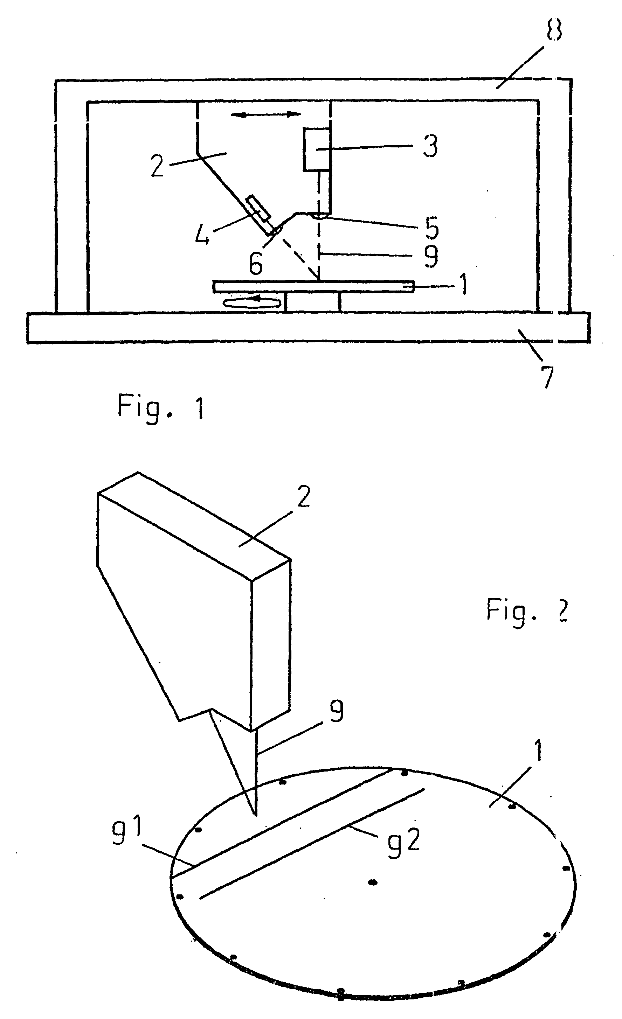

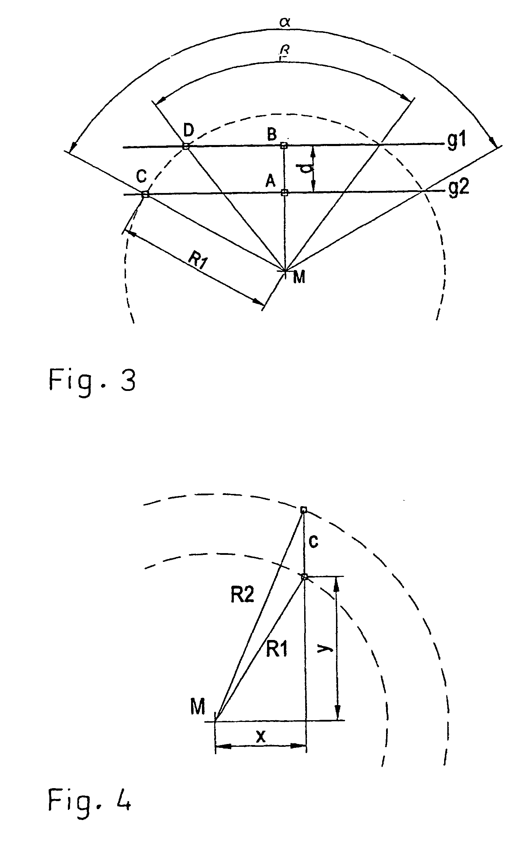

Die Vorrichtung zur berührungslosen dreidimensionalen Vermessung von Körpern besteht aus einem Drehtisch 1 zur Aufnahme des Körpers und einem optischen Triangulationssensor 2 mit mindestens einer Strahlungsquelle 3, einem Strahlungsdetektor 4 und Optiken in Form einer Fokuslinse 5 und einer Abbildungslinse 6.
Die Strahlungsquelle 3 sind eine Laserdiode und der Strahlungsdetektor 4 ein Festkörperbildsensor.
Auf einer Grundplatte 7 ist ein u-förmiges Gestell 8 befestigt. Auf der Grundplatte 7 und mittig des Mittelteils des u-förmigen Gestells 8 ist der Drehtisch 1 angeordnet (Darstellung in der Fig. 1). Der Durchmesser des Drehtisches 1 ist kleiner als die Länge des Mittelteils des u-förmigen Gestells 8.
Das Mittelteil des u-förmigen Gestells 8 weist weiterhin eine Führung auf, in der der Triangulationssensor 2 korrespondierend angeordnet ist. Der Triangulationssensor 2 ist damit über dem Drehtisch 1 mittels einen entsprechenden Antrieb bewegbar. Der Antrieb ist in dem Mittelteil integriert. Der Triangulationssensor 2 ist weiterhin so an dem Mittelteil platziert, dass die Strahlung 9 der Strahlungsquelle 3 senkrecht auf den Drehtisch 1 fällt.
Der Mittelpunkt des Drehtisches 1 wird bestimmt und bildet den Ursprung in einem Polarkoordinatensystem.
Bei der Erstinbetriebnahme oder einer Lageveränderung der Vorrichtung wird dieses Koordinatensystem für die zu messenden Körper erstellt.
Zur Ermittlung des Koordinatensystems besitzt der Drehtisch 1 mehrere parallel zueinander verlaufende Linien (Fig. 2 und 3) oder ein Messkörper wird auf dem Drehtisch 1 platziert. Dieser weist entweder parallel zueinander verlaufende und geradlinig ausgebildete Körperkanten oder Linien zur Bestimmung eines Koordinatensystems (ähnlich der Darstellungen in den Fig. 2 und 3) auf. Die Linien oder Körperkanten können sich beliebig auf dem Drehtisch befinden. Der Abstand der geradlinig verlaufenden Linien oder Körperkanten ist bekannt. Der Drehtisch vollführt in der Phase der Ermittlung des Koordinatensystems eine Drehung. Dabei werden die Linien g1 und g2 im Messfleck C und D des Triangulationssensors 2 erfasst. Gleichzeitig werden die Winkel der jeweils auf einer Linie g1 oder g2 liegenden Messflecke ermittelt. Durch den bekannten Abstand d = AB der parallel verlaufenden Linien g1 und g2 oder Körperkanten, den gemessenen Winkeln $\alpha$ und $\beta$ und den rechten Winkel zwischen der Gerade MB und den Linien g1 und g2 ist über trigonometrische Berechnungen der Radius R1 und damit der Abstand zwischen dem Triangulationssensor 2 und dem Mittelpunkt des Drehtisches 1 gegeben (Darstellung in der Fig. 3).

$$R1 = \frac{d}{\cos \beta/2 - \cos \alpha/2}$$

Durch eine Verschiebung c des Triangulationssensors 2 oder des Drehtisches 1 und nochmaliger Rotation und Messung der Winkel $\alpha$ und $\beta$ wird der Abstand R2 analog dem R1 bestimmt (Darstellung in der Fig. 4). Die Richtung der Verschiebung c definiert gleichzeitig eine Richtung des Koordinatensystems. Über den Satz des Pythagoras werden die Koordinaten x und y des Koordinatensytems ermittelt. Dadurch wird der Abstand des Mittelpunkts des Drehtisches 1 von der aktuellen Position des Triangulationssensors 2 x und y+c bestimmt. Damit sind die Messpunkte des Körpers maßlich bestimmbar.

$$y = \frac{R2^2 - R1^2 - c^2}{2 \cdot c}$$

$$x = \sqrt{R1^2 - \left[\frac{R2^2 - R1^2 - c^2}{2 \cdot c}\right]^2}$$

Zur Unterstützung der Messung können mehrere Kreise mit unterschiedlichen Radien auf dem Drehtisch 1 angeordnet sein. Diese erleichtern zum einen die maßliche Zuordnung und zum anderen die Positionierung des Körpers auf dem Drehtisch 1.

Der Messkörper ist als Folie mit mehreren kreisförmigen Linien realisierbar. Dieser kann auf dem Drehtisch 1 verbleiben und dient gleichzeitig als Justierhilfe für die Körper. Dazu ist die Folie mit der Oberfläche des Drehtisches 1 verklebt.

Die Antriebe des Drehtisches 1 und des Triangulationssensors 2 sind mit einem Computer als Steuerung verbunden. Der Computer dient gleichzeitig der Auswertung der Messergebnisse. Dazu sind die Strahlungsquelle 3 und der Strahlungsdetektor 4 des Triangulationssensors 2 mit diesem zusammengeschaltet.

Bei Körpern mit einem hohen Streuverhalten in Form von Mehrfachreflexionen gegenüber der Strahlung 9 der Strahlungsquelle 3 wird dieser mit Auflagekörpern zumindest an den interessierenden Messbereichen versehen. Diese bestehen aus einem Stoff, der nur geringe Mehrfachreflexionen zuläßt, und dessen Dicke bekannt ist. Derartige Auflagekörper bestehen z.B. aus Keramik. Damit sind auch Oberflächenkonturen von Körpern mit glänzenden Oberflächen weitestgehend ohne Messfehler messbar.

Der Drehtisch 1 kann entweder mehrere Anschläge besitzen oder in ihm ist wenigstens ein Magnet integriert. Vorteilhafterweise sind die Anschläge auf dem Drehtisch 1 verfahrbar, so dass Körper unterschiedlicher Geometrie einfach weitestgehend mittig auf dem Drehtisch 1 platzierbar sind.

In einer weiteren Ausführungsform ist das u-förmige Gestell 8 L-förmig ausgebildet und so gegenüber dem Drehtisch 1 angeordnet, dass sich ein Schenkel parallel über dem Drehtisch 1 befindet. Dieser Schenkel ist die Führung für den Triangulationssensor 2 (Darstellung in der Fig. 2).

**Patentansprüche**

1. Vorrichtung zur berührungslosen dreidimensionalen Vermessung eines Körpers mit einem Drehtisch (1) und einem optischen Triangulationssensor (2) mit mindestens einer Strahlungsquelle (3), einem Strahlungsdetektor (4) und einer Optik, **dadurch gekennzeichnet, dass** der Triangulationssensor (2) über dem Drehtisch (1) in einer Achse mittels eines Antriebs bewegbar so angeordnet ist, dass die Strahlung der Strahlungsquelle auf den Körper trifft, dass sich der Körper in einem durch zum einen wenigstens zwei parallel zueinander verlaufenden Linien (g1, g2) oder Körperkanten mit bekannten Abstand (d) und Winkelbestimmungen ($\alpha$, $\beta$) des Drehtisches (1) und zum anderen wenigstens zwei Messpunkte mit bekannten Abstand (R1, R2) zum Mittelpunkt (M) und bekannter Verschiebung (c) des Triangulationssensors (2) zwischen den Messpunkten bestimmten Koordinatensystem auf dem Drehtisch (1) befindet und dass der Drehtisch (1), der Antrieb und der Triangulationssensor (2) mit einer Datenverarbeitungs- und Steuereinheit verbunden sind.

2. Vorrichtung nach Patentanspruch 1, **dadurch gekennzeichnet, dass** die Strahlungsquelle (3) des Triangulationssensors (2) so angeordnet ist, dass die Strahlung der Strahlungsquelle (3) senkrecht auf die Oberfläche des Drehtisches (1) trifft.

3. Vorrichtung nach Patentanspruch 1, **dadurch gekennzeichnet, dass** der Triangulationssensor (2) über ein Dreh- oder Kugelgelenk mit einem Antriebssystem über dem Drehtisch (1) in einer Achse mittels des Antriebs bewegbar angeordnet ist und dass mindestens ein den Winkel zwischen der Strahlung (9) und dem Werkstück direkt und/oder indirekt messender Sensor vorhanden ist.

4. Vorrichtung nacn Patentanspruch 1, **dadurch gekennzeichnet, dass** wenigstens Bereiche der Oberfläche des eine hohes Streuverhalten gegenüber der Strahlung (9) der Strahlungsquelle (3) in Form von Mehrfachreflexionen aufweisenden Körpers mit einem Auflagekörper bekannter Dicke und geringen Streuverhaltens fest und/oder lösbar versehen sind.

**5.** Vorrichtung nach Patentanspruch 1, **dadurch gekennzeichnet, dass** die parallel verlaufende Linien oder Körperkanten eines Messkörpers auf dem Drehtisch (1) geradlinig oder kreisförmig angeordnet sind.

**6.** Vorrichtung nach Patentanspruch 1, **dadurch gekennzeichnet, dass** sich nur während der Bestimmung eines Koordinatensystems ein Messkörper mit wenigstens zwei Kanten oder ein Messkörper mit wenigstens zwei Linien auf dem Drehtisch (1) befindet.

**7.** Vorrichtung nach Patentanspruch 1, **dadurch gekennzeichnet, dass** der Drehtisch (1) mindestens zwei mit einem Abstand zueinander angeordnete Anschläge für den Körper besitzt.

**8.** Vorrichtung nach Patentanspruch 1, **dadurch gekennzeichnet, dass** in den Drehtisch (1) mindestens ein Magnet integriert ist.

**9.** Verfahren zur Bestimmung eines Koordinatensystems für Messpunktskoordinaten an einer Vorrichtung zur berührungslosen dreidimensionalen Vermessung eines Körpers mit
einem Drehtisch (1) zur Aufnahme des Körpers,

- einem optischen Triangulationssensor (2) mit mindestens einer Strahlungsquelle (3), einem Strahlungsdetektor (4) und einer Optik, der über dem Drehtisch (1) in einer Achse mittels eines Antriebs bewegbar so angeordnet ist, dass die Strahlung (9) der Strahlungsquelle (3) auf den Körper trifft, und
- einer Datenverarbeitungs- und Steuereinheit für Drehtisch (1), Antrieb und Triangulationssensor (2),

bei dem anhand von wenigstens zwei parallel zueinander verlaufenden Linien (g1, g2) oder Körperkanten mit bekanntem Abstand (d) durch deren Drehung und aufeinanderfolgende Erfassung im Messfleck des Triangulationssensors (2) Winkelbestimmungen ($\alpha$, $\beta$) des Drehtisches (1) in einer ersten und in einer zweiten, um eine bekannte Strecke c verschobenen Stellung des Triangulationssensors (2) vorgenommen und daraus Abstände R1, R2 des Triangulationssensors (2) zum Drehtischmittelpunkt (M) und weiter Koordinaten x, y des Triangulationssensors (2) relativ zum Drehtischmittelpunkt (M) als Koordinatenursprung berechnet werden.

**10.** Verfahren nach Patentanspruch 9, **dadurch gekennzeichnet, dass** die Strahlungsquelle (3) des Triangulationssensors (2) so angeordnet ist, dass die Strahlung der Strahlungsquelle (3) senkrecht auf die Oberfläche des Drehtisches (1) trifft.

**11.** Verfahren nach Patentanspruch 9 oder 10, **dadurch gekennzeichnet, dass** als parallel verlaufende Linien oder Körperkanten eines Messkörpers auf dem Drehtisch (1) gerade Linien oder kreisförmig gebogene Linien verwendet werden.

**12.** Verfahren nach einem der Patentansprüche 9 bis 11, **dadurch gekennzeichnet, dass** sich nur während der Bestimmung des Koordinatensystems ein Messkörper mit wenigstens zwei Kanten oder ein Messkörper mit wenigstens zwei Linien auf dem Drehtisch (1) befindet.

**Claims**

**1.** An apparatus for non-contact three-dimensional measurement of a body with a turntable (1) and an optical triangulation sensor (2) with at least one radiation source (3), radiation detector (4), and an optical system, **characterized in that** said triangulation sensor (2) is placed above said turntable (1) and can be moved along an axis using a driving mechanism so that radiation from the radiation source hits said body, that said body is located on the turntable (1) in a system of coordinates determined, on the one hand, by at least two parallel lines (g1, g2) or body edges with a known spacing (d) and angles ($\alpha$, $\beta$) of the turntable (1) and, on the other hand, by at least two measuring points at known distance (R1, R2) from the center (M) and known displacement (c) of the triangulation sensor (2) between these measuring points, and that said turntable (1), the driving mechanism and said triangulation sensor (2) are connected to a data processing and control unit.

**2.** An apparatus according to claim 1, **characterized in that** said radiation source (3) of said triangulation sensor (2) is placed in such a way that the radiation from the radiation source (3) is perpendicular to the surface of said turntable (1).

3. An apparatus according to claim 1, **characterized in that** said triangulation sensor (2) is placed on a hinge or ball-and-socket joint above said turntable (1) and can be moved along an axis using the driving mechanism, and that there is at least one sensor that directly and/or indirectly measures the angle between the radiation (9) and the workpiece.

4. An apparatus according to claim 1, **characterized in that** at least some areas of the surface of a body that produces excessive scattering in the form of multiple reflections of the radiation (9) from said radiation source (3) are fixedly and/or removably covered by a covering body of known thickness and with low-scattering surfaces.

5. An apparatus according to claim 1, **characterized in that** the parallel lines or body edges of a measuring body are straight or annular on said turntable (1).

6. An apparatus according to claim 1, **characterized in that** a measuring body with at least two edges or a measuring body with at least two lines is placed on said turntable (1) when determining a system of coordinates only.

7. An apparatus according to claim 1, **characterized in that** said turntable (1) has at least two end stops for bodies placed at a distance from each other.

8. An apparatus according to claim 1, **characterized in that** at least one magnet is integrated into said turntable (1).

9. A method for determining a system of coordinates for measuring points on an apparatus for non-contact three-dimensional measuring of a body comprising

   - a turntable (1) to receive said body,
   - an optical triangulation sensor (2) with at least one radiation source (3), radiation detector (4), and an optical system that is placed above said turntable (1) and can be moved along an axis using a driving mechanism so that the radiation (9) from said radiation source (3) hits said body, and
   - a data processing and control unit for turntable (1), driving mechanism and triangulation sensor (2),

   wherein at least two lines (g1, g2) or body edges running in parallel at a known distance (d) are used to determine angles ($\alpha$, $\beta$) of turntable (1) by rotating said lines and subsequently capturing them in the measuring spot of said triangulation sensor (2) in a first and a second position of said triangulation sensor (2) displaced from said first position by the known dislocation c, said angles being used to calculate the distances R1, R2 of said triangulation sensor (2) from the center (M) of said turntable and to further calculate the coordinates x, y of said triangulation sensor (2) relative to the turntable center (M) as coordinates of origin.

10. A method according to claim 9, **characterized in that** said radiation source (3) of said triangulation sensor (2) is placed in such a way that the radiation from the radiation source (3) is perpendicular to the surface of said turntable (1).

11. A method according to claims 9 or 10, **characterized in that** the parallel lines or body edges of a measuring body are arranged straightly or annularly on said turntable (1).

12. A method according to any one of the claims 9 to 11, **characterized in that** a measuring body with at least two edges or a measuring body with at least two lines is placed on the said turntable (1) when determining a system of coordinates only.

## Revendications

1. Dispositif pour la mesure tridimensionnelle sans contact d'un corps au moyen d'une table tournante (1) et d'un capteur optique de triangulation (2), avec au moins une source de rayonnement (3), un détecteur de rayonnement (4) et une optique, **caractérisé par le fait que** le capteur optique de triangulation (2) est axialement disposé au-dessus de la table tournante (1) et peut être déplacé à l'aide d'un mécanisme d'entraînement, de manière à ce que l'incidence du rayonnement émis par la source de rayons se produise au niveau du corps, que ce corps situé sur la table tournante (1) est positionné soit dans un système de coordonnées déterminée par les points de mesure avec au moins deux lignes parallèles (g1, g2) ou avec des arêtes de corps dont la distance (d) et les angles ($\alpha$, $\beta$) par rapport à la table tournante (1) sont connus, soit dans un système de coordonnées avec au moins deux points de mesure où le capteur de triangulation (2) est disposé à des distances (R1, R2) connues du point central (M), et présentant un décalage (c) connu, et que la table tournante (1), le mécanisme d'entraînement et le capteur de triangulation (2) sont connectés à une unité de commande de données.

2. Dispositif suivant la revendication 1, **caractérisé par le fait que** la source de rayons (3) du capteur de triangulation (2) est disposée de manière à ce que l'incidence du rayonnement émis par la source de rayons (3) soit perpendiculaire par rapport à la surface de la table tournante (1).

3. Dispositif suivant la revendication 1, **caractérisé par le fait que** le capteur de triangulation (2) peut axialement être déplacé au-dessus de la table (1), à l'aide d'un joint articulé ou d'un joint à rotule muni d'un système d'entraînement, et qu'il y a au moins un capteur qui effectue, de façon directe ou indirecte, la mesure de l'angle entre le rayonnement (9) et la pièce.

4. Dispositif suivant la revendication 1, **caractérisé par le fait qu'**au moins quelques zones de la surface du corps qui, sous forme de réflexions multiples, présente un fort comportement de diffusion par rapport au rayonnement (9) de la source de rayons (3), sont pourvues d'un corps d'appui dont l'épaisseur est connue et qui, lui, présente un faible comportement de diffusion, ce corps d'appui pouvant être monté de façon fixe et/ou de manière démontable.

5. Dispositif suivant la revendication 1, **caractérisé par le fait que** les lignes parallèles ou les arêtes d'un corps à mesurer sont disposées sur la table tournante (1) sous forme rectiligne ou circulaire.

6. Dispositif suivant la revendication 1, **caractérisé par le fait qu'**un corps à mesurer avec au moins deux arêtes ou un corps à mesurer avec au moins deux lignes ne se trouvent sur la table tournante (1) que lors de la détermination du système de coordonnées.

7. Dispositif suivant la revendication 1, **caractérisé par le fait que** la table tournante (1) est munie d'au moins deux butées disposées de façon écartée l'une de l'autre.

8. Dispositif suivant la revendication 1, **caractérisé par le fait qu'**au moins un aimant est intégré dans la table tournante (1).

9. Procédé pour déterminer un système de coordonnées avec des points de mesure sur un dispositif pour la mesure tridimensionnelle sans contact d'un corps avec

- une table tournante (1) pour recevoir le corps,
- un capteur optique de triangulation (2) avec au moins une source de rayons (3), un détecteur de rayonnement (4) et une optique, le capteur étant axialement disposé audessus de la table tournante (1) et pouvant être déplacé au moyen d'un mécanisme d'entraînement, de manière à ce que l'incidence du rayonnement (9) émis par la source de rayons (3) se produise au niveau du corps, et
- une unité de commande de données pour la table tournante (1), le mécanisme d'entraînement et le capteur de triangulation (2),

où, au moyen de la rotation d'au moins deux lignes parallèles (g1, g2) ou des arêtes de corps disposées à distance (d) connue et grâce à l'acquisition consécutive des données de mesure au niveau du point de mesure du capteur de triangulation (2), des angles ($\alpha$, $\beta$) de la table tournante (1) sont déterminés d'abord dans une première position, puis dans une deuxième position déplacée d'un parcours connu (c) du capteur de triangulation (2), et que sur la base de ces données, des distances R1, R2 entre le capteur de triangulation (2) et le point central de la table tournante (M) sont calculées, tout en calculant les autres coordonnées x, y du capteur de triangulation (2) par rapport au milieu de la table tournante (M), ces distances représentent les points d'origine.

10. Procédé suivant la revendication 9, **caractérisé par le fait que** la source de rayons (3) du capteur de triangulation (2) est disposée de manière à ce que l'incidence du rayonnement émis par la source de rayons (3) soit perpendiculaire par rapport à la surface de la table tournante (1).

11. Procédé suivant la revendication 9 ou 10, **caractérisé par le fait que** les lignes parallèles ou les arêtes d'un corps à mesurer sur la table tournante (1) constituent des lignes droites ou circulaires et courbées.

**12.** Procédé suivant l'une des revendications 9 à 11, **caractérisé par le fait qu'**un corps à mesurer avec au moins deux arêtes ou un corps à mesurer avec au moins deux lignes ne se trouvent sur la table tournante (1) que lors de la détermination du système de coordonnées.

Fig. 1

Fig. 2

Fig. 3

Fig. 4